Europäisches Patentamt

European Patent Office

Office européen des brevets

(19)

(11) Publication number: **0 154 735**
**B1**

(12) EUROPEAN PATENT SPECIFICATION

(45) Date of publication of patent specification: **09.08.89**

(51) Int. Cl.⁴: **A 63 B 37/00**, A 63 B 37/02

(21) Application number: **84303514.8**

(22) Date of filing: **24.05.84**

(54) Short distance golf ball and production thereof.

(30) Priority: **12.03.84 US 588190**

(43) Date of publication of application:
**18.09.85 Bulletin 85/38**

(45) Publication of the grant of the patent:
**09.08.89 Bulletin 89/32**

(84) Designated Contracting States:
**AT BE CH DE FR GB IT LI NL SE**

(56) References cited:
**GB-A- 649 217**
**US-A-3 069 170**
**US-A-3 313 545**
**US-A-3 940 145**

(73) Proprietor: **MACGREGOR GOLF COMPANY**
**1601 South Slappey Boulevard P.O. Box 3929**
**Albany Georgia 31706 (US)**

(72) Inventor: **Puckett, Troy L.**
**2609 West Doublegate Drive**
**Albany Georgia 31707 (US)**
Inventor: **Cadorniga, Lauro C.**
**1701 Lynwood Lane**
**Albany Georgia 31707 (US)**

(74) Representative: **Spencer, Graham Easdale et al**
**A.A. Thornton & CO Northumberland House**
**303-306, High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention is concerned with a short distance golf ball, that is a golf ball which has performance characteristics comparable to that of a conventional golf ball except that it plays from 30%—70% shorter in distance than a conventional golf ball.

A conventional 18-hole golf course occupies approximately 180 acres (73 hectares) of land. Because of the availability and cost of land in metropolitan areas and in resort areas where golf courses are frequently built, it is desirable to be able to design a golf course which uses substantially less area but at the same time presents all of the challenges of a conventional golf course. By providing a short distance golf ball which will play approximately 50% of the distance of a conventional golf ball, the land requirements for a golf course can be reduced 67% to 50%.

In order for a golfer to realize the ordinary training and practice benefits as well as the enjoyment associated with playing a conventional ball on a conventional course, the short distance golf ball must perform in a manner substantially similar to a conventional ball except that the distance it flies must be approximately 50% shorter. In order to play comparably to a conventional ball, the short distance golf ball must be manoeuvrable in play, which means that the golfer must be able to draw or fade, to hook or slice, or to hit high or low shots with the short distance ball much the same as with a conventional golf ball. In addition, the short distance ball when struck by a putter on a green must perform essentially the same as a conventional golf ball. The golfer must also be able to impart sufficient backspin to the short distance ball when properly struck by a medium or short iron to make the short distance golf ball "bite" or "hold" the green to the same degree possible with a conventional ball when it is struck in the same manner. The short distance golf ball must perform the same as a conventional ball in terms of flight and green holding when it is hit from sand bunkers.

If the short distance golf ball has the above listed attributes, the golfer can play the short distance golf ball on a short golf course, use all of his clubs, and achieve the same practice and training benefits as well as the enjoyment associated with playing on a conventional golf course, in about half the time on a golf course that occupies about half the acreage of a conventional golf course.

There have been previous proposals for short distance golf balls, one such being U.S. Patent 3940145 which describes a medium range golf ball comprising impact damping means for dissipating golf club impact energy, and patterned surface contouring of such design and dimensions that when operating in conjunction with the impact damping means give a ball that will travel one-quarter to one-half the distance of a regulation golf ball when hit under identical conditions. One particular embodiment of such a golf ball, Figure 4 of the patent, comprises a cellular or foamed polyurethane core encapsulated by a substantially thick dimpled cover.

We have discovered that a short distance golf ball having the playing characteristics described above cannot be provided by simply reducing the resilience of a conventional golf ball so as to reduce the initial velocity of the ball off of the face of the club. Such a "dead ball", even with a special aerodynamic dimple design to maximize lift, will not produce the lift necessary to give the trajectory of a conventional ball which weighs approximately 45 grams.

We have further found that to provide a short distance golf ball which has essentially the same performance characteristics as a conventional golf ball except that its playing distance is from 30% to 70% shorter, it is necessary that the golf ball be lighter than a conventional ball so that it easier to spin off of the face of the club and has less gravitational force to overcome. These requirements are met by a one-piece golf ball which is moulded from a thermoplastic material which is sufficiently light (that is, has a sufficiently low specific gravity) and at the same time has the resilience to fly properly and the rigidity to withstand the impact of standard golf clubs without permanent deformation.

According to the present invention, there is provided a one-piece short distance golf ball formed of a moulding of foamed thermoplastic polymer, the ball having an increasing density gradient from the centre to the surface, characterised in that the thermoplastic polymer contains, as a filler therein, microscopic glass bubbles which are distributed uniformly throughout the polymer.

The present invention also comprises a process for making a one-piece short distance golf ball, which comprises:

a. forming a mixture of thermoplastic resin, a chemical blowing agent, and, as a filler material, microscopic glass bubbles;

b. injecting a predetermined amount of the mixture into a golf ball mould cavity;

c. holding the mixture in the mould cavity for a predetermined time;

d. opening the mould cavity and removing the golf ball therefrom; and

e. quenching the golf ball in cooled water.

The golf ball preferably has a cellular core structure and a dense outer skin, the latter preferably having a thickness of from 0.125 inch (3.175 mm) to 0.625 inch (15.88 mm). The thickness of the dense outer skin determines the moment of inertia of the ball which, in turn, determines how much spin can be imparted to the ball when struck by a golf club. The range of thicknesses mentioned corresponds to the preferred range of moments of inertia for the ball to have desirable playing characteristics.

It is preferred to use from 0.5 to 15% of the filler mateiral, that is the microscopic glass bubbles, based on the weight of the thermoplastic polymer.

For the better understanding of the invention, a preferred embodiment of golf ball will now be described, by way of example, with reference to the accompanying drawings, in which:

Figure 1 is a plan view of a golf ball of the present invention; and

Figure 2 is a cross section of the golf ball of Figure 1 as taken along line 2—2.

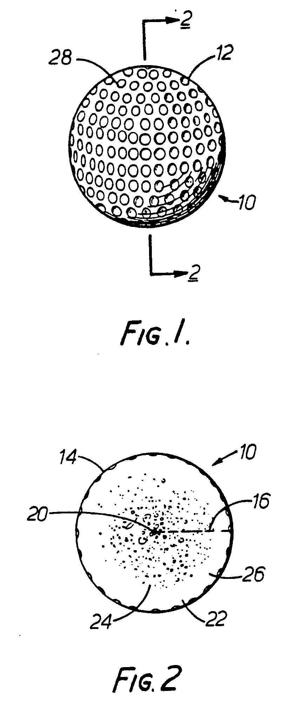

Referring to Figure 1, the golf ball 10 is approximately 1.68 inch (42.67 mm) in diameter, the same size as a conventional golf ball, and weighs from 15 to 30 grams as compared to approximately 45 grams for a conventional golf ball. The golf ball 10 is a one-piece golf ball made from a mixture 12 of a thermoplastic material and a filler material. The golf ball 10 is formed by injection moulding the mixture together with a chemical blowing agent, as described in greater detail below.

With reference to Figure 2, the cross section of the golf ball 10 shows that the density of the ball material increases along the radius 16 of the ball from the centre 20 to the surface 14. The ball 10 has an outer dense skin 22 of from 0.125 inch to 0.625 inch (3.175 to 15.88 mm) thickness. The skin thickness, which is inversely related to the amount of blowing agent used in making the golf ball, is most preferably approximately 0.250 inch (6.35 mm). The core 24 of the ball 10 has a blown cellular structure. The boundary 26 between the cellular core 24 and the skin 22, while not sharply delineated, is observable from an inspection of a cross sectioned sample of a golf ball made in accordance with the present invention.

The ball 10 has dimples 28 which are formed during the injection moulding process by the mould pattern. The dimples 28 are formed at the surface 14 in any conventional dimple pattern that can be used on a conventional golf ball. The golf ball is finished in the conventional manner by painting the ball white, yellow or orange, or any other suitable colour.

The weight and density distribution of the material of the ball ensures that the golf ball will perform in most respects in the same way as a conventional golf ball except that its playing distance will be shorter. The short distance golf ball of the present invention has a rebound of from 50% to 80%, and preferably 67%, and it has a compression of from 0 to 100, preferably 10, as measured on the Atti compression tester.

The material 12 from which the ball is made comprises a thermoplastic polymer and microscopic glass bubbles distributed uniformly throughout the polymer. The thermoplastic polymer is preferably the product of the reaction of an olefin and a metallic salt of an unsaturated monocarboxylic acid. Suitable ionomer resins for producing such thermoplastic polymers are sold by the Dupont Company, Polymer Products Department, Ethylene Polymers Division, Wilmington, Delaware 19898, under the trademark "Surlyn". The Surlyn resin is available both as a zinc ionic copolymer and as a sodium ionic copolymer. It has been found that each copolymer is useful in carrying out the present invention and that mixtures of the two copolymers are also useful in carrying out the present invention.

The thermoplastic material, as previously stated, includes microscopic glass bubbles which serve as filler or extender. In the finished product the glass bubbles are distributed uniformly throughout the thermoplastic polymer. Preferred glass bubbles for carrying out the present invention are manufactured by the 3M Company, St. Paul, Minnesota 55101 and range in density from 0.12 to 0.18 g/cc. The use of such glass bubbles as the filler improves impact resistance by functioning as microscopic shock absorbers to dissipate energy and thus help to reduce the distance the ball travels when struck.

Other inorganic fillers, such as titanium dioxide or calcium carbonate, can be used in addition.

Suitable blowing agents for use in the process according to the invention are, for example, Freon, nitrogen gas, and carbon dioxide; these may, in particular, be used with Surlyn. The blowing agent used should preferably have a decomposition temperature of from 230° to 435°F (110° to 224°C). Two preferred chemical blowing agents are sold under the trade designation Celogen TSH and Celogen RA by Uniroyal Chemical, Naugatuck, Connecticut 06770. Norteck brand foam concentrate sold by Northern Petro Chemical Company, Clinton, Massachusetts 01510 also works well.

While the process can be operaterd over a wide range of blowing agent decomposition temperatures, higher decomposition temperatures are preferable because the risk of premature expansion can be minimized. Thus decomposition temperatures of from 350° to 450°F (177° to 232°C) are preferred.

The following formulations have been found to produce acceptable golf balls which have approximately 0.250 inch (6.35 mm) thick skin and which have the physical and performance characteristics desired for short distance golf balls.

Example 1

| Material | Parts (by weight) |
| --- | --- |
| Surlyn Ionomer Resin 1605 | 50 |
| Surlyn Ionomer Resin 1706 | 50 |
| Glass Bubbles (C15/250- by 3M) | 6.25 |
| Celogen TSH | 1.06 |

Example 2

| Material | Parts (by weight) |
| --- | --- |
| Surlyn Ionomer Resin 1855 | 100 |
| Glass Bubbles (C15/250- by 3M) | 6.25 |
| Celogen TSH | 1.06 |

### Example 3

| Material | Parts (by weight) |
|---|---|
| Surlyn Ionomer Resin 1856 | 100 |
| Glass Bubbles (C15/250-by 3M) | 6.25 |
| Celogen TSH | 1.06 |

### Example 4

| Material | Parts (by weight) |
|---|---|
| Surlyn Ionomer Resin 1855 | 50 |
| Surlyn Ionomer Resin 1856 | 50 |
| Glass Bubbles (C15/250-by 3M) | 6.25 |
| Celogen TSH | 1.06 |

### Example 5

| Material | Parts (by weight) |
|---|---|
| Surlyn Ionomer Resin 1855 | 50 |
| Surlyn Ionomer Resin 1856 | 50 |
| Glass Bubbles (SSX-by 3M) | 3.0 |
| Celogen RA | 1.5 |

### Example 6

| Material | Parts (by weight) |
|---|---|
| Surlyn Ionomer Resin 1855 | 50 |
| Surlyn Ionomer Resin 1856 | 50 |
| Glass Bubbles (SSX-by 3M) | 3.0 |
| Titanium Dioxide | 0.5 |
| Celogen RA | 0.5 |

### Example 7

| Material | Parts (by weight) |
|---|---|
| Surlyn Ionomer Resin 1855 | 50 |
| Surlyn Ionomer Resin 1856 | 50 |
| Glass Bubbles (SSX-by 3M) | 3.0 |
| Titanium Dioxide | 0.5 |
| Norteck 1039 | 0.5 |

The thickness of the skin of the finished golf ball is inversely proportional to the amount of blowing agent. For example, reducing the amount of Celogen TSH to 0.50 parts will produce a skin thickness of approximately 0.5 inch (12.7 mm) in the finished golf ball. Therefore a range of 0.50 to 2.00 parts of blowing agents should produce skin thickness of from 0.5 to 0.125 inch (12.7 to 3.88 mm) respectively.

In order to form the short distance golf ball of the present invention, the ingredients specified are first mixed together prior to injection moulding.

A conventional screw injection machine as used to manufacture conventional two-piece moulded golf balls is suitably modified for foam moulding as follows. The injection nozzle is provided with a shut-off valve to ensure that only a predetermined amount of the mixture is injected into each mould cavity. In particular, it is preferred that only about 15 to 30 grams of the mixture per golf ball be injected. The injection machine must generate sufficient injection pressure to be able to inject the material into the mould cavity in one second or less to minimize premature gas expansion. Also flow channels must be kept short and provide equidistance flow to the extremities of the cavity to achieve uniform skin thickness for each ball moulded.

In order to ensure that the resulting short distance golf ball has the proper skin thickness, it is important that the process parameters be controlled. The initial temperature of the mixture is room temperature. The mould cavity is chilled by 40°F (4.4°C) water to approximately 40° to 70°F (4.4 to 21.1°C). The injection cylinder is provided with a temperature gradient along its length to the nozzle. The rear part of the cylinder is kept at a lower temperature (preferably about 325°F; 163°C) to reduce premature gas expansion, and the nozzle is maintained at a higher temperature (preferably about 400°F; 204°C) to make rapid injection easier by reducing viscosity of the mixture. The mould is then held closed (elapsed time) for from 60 to 240 seconds (depending on the skin thickness) while maintaining the mould temperature at approximately 40° to 70°F (4.4 to 21.1°C). The process requires about 60 seconds per 0.125 inch (3.18 mm) of skin thickness to ensure that the skin is fully moulded before the mould is opened. After the specified time has elapsed, the mould is opened, the ball is removed and immediately quenched in cold water to curtail any further blowing.

By mixing the requisite amount of blowing agent and regulating the process within the parameters specified above, the density of the thermoplastic material which forms the short distance golf ball will have the desired skin thickness to provide the performance characteristics required.

We have achieved best results with the following process parameters for golf balls having a skin thickness of approximately 0.250 inch (6.35 mm) and manufactured from the mixtures specified in Examples 1 to 9:

| Process parameter | Value |
|---|---|
| Initial mould temperature | 40°F—70°F (4.4°—21.1°C) |
| Cylinder temperature | |
| rear | 325°F (163°C) |
| centre | 350°F (177°C) |
| front | 375°F (191°C) |
| nozzle | 400°F (204°C) |
| Screw back pressure | 250 psi (17.5 kg/cm²) |
| Cure cycle (elapsed time) | 109 sec. |
| Fill rate | 1 sec. or less. |

## Claims

1. A one-piece short distance golf ball formed of a moulding of foamed thermoplastic polymer, the ball having an increasing density gradient from the centre to the surface, characterised in that the thermoplastic polymer contains, as a filler therein, microscopic glass bubbles which are distributed uniformly throughout the polymer.

2. A golf ball according to claim 1, in which the ball has a cellular core structure and a dense outer skin.

3. A golf ball according to claim 2, in which the skin has a thickness of from 0.125 inch (3.175 mm) to 0.625 inch (15.88 mm).

4. A golf ball according to any of claims 1 to 3, which comprises from 0.5 to 15% of the filler material based on the weight of the thermoplastic polymer, and the ball has a diameter of approximately 1.68 inch (42.67 mm) and weighs from 15 to 30 grams.

5. A process for making a one-piece short distance golf ball, which comprises:

   a. forming a mixture of thermoplastic resin, a chemical blowing agent, and, as a filler material, microscopic glass bubbles;

   b. injecting a predetermined amount of the mixture into a golf ball mould cavity;

   c. holding the mixture in the mould cavity for a predetermined time;

   d. opening the mould cavity and removing the golf ball therefrom; and

   e. quenching the golf ball in cooled water.

6. A process according to claim 5, in which the mixture comprises from 0.5 to 15% of the filler material and from 0.25 and 2.0% of blowing agent, based on the weight of the thermoplastic polymer.

7. A process according to claim 5 or 6, in which the predetermined amount of mixture is from 15 to 30 grams for a golf ball mould cavity having a diameter of approximately 1.68 inch (42.67 mm) and is injected into the mould cavity in 1 second or less.

8. A process according to any of claims 5 to 7, in which the mixture is injected by an injector that has an increasing temperature gradient from its inlet to its nozzles so that premature blowing is minimized in the injector and viscosity of the mixture is reduced at the nozzle.

9. A process according to any of claims 5 to 8, in which the mixture is held in the mould for from 60 to 240 seconds.

## Patentansprüche

1. Einstückiger Golfball für kurze Entfernungen, gebildet aus einem Formteil aus geschäumtem thermoplastischem Polymer, wobei der Ball einen zunehmenden Dichtegradienten von der Mitte zu der Oberfläche besitzt, dadurch gekennzeichnet, daß das thermoplastische Polymer als Füllmittel mikroskopische Glasblasen enthält, die gleichmäßig durch das Polymer verteilt sind.

2. Golfball nach Anspruch 1, worin der Ball eine zelluläre Kernstruktur und eine dichte Außenhaut besitzt.

3. Golfball nach Anspruch 2, worin die Haut eine Dicke von 0,125 Inch (3,175 mm) bis 0,625 Inch (15,88 mm) besitzt.

4. Golfball nach einem der Ansprüche 1 bis 3, welcher 0,5 bis 15% des Füllmaterials, bezogen auf das Gewicht des thermoplastischen Polymers, umfaßt und wobei der Ball einen Durchmesser von ungefähr 1,68 Inch (42,67 mm) besitzt und 15 bis 30 g wiegt.

5. Verfahren zur Herstellung eines einstückigen Golfballs für kurze Entfernungen, bei dem

   a. eine Mischung aus thermoplastichem Harz, einem chemischem Treibmittel und, als Füllmaterial, mikroscopischen Glasblasen gebildet wird;

   b. eine vorbestimmte Menge der Mischung in eine Golfballformhöhlung eingespritzt wird;

   c. die Mischung in der Formhöhlung über eine vorbestimmte Zeit gehalten wird;

   d. die Formhöhlung geöffnet und der Golfball daraus entfernt wird, und

   e. der Golfball in gekühltem Wasser abgeschreckt wird.

6. Verfahren nach Anspruch 5, worin die Mischung 0,5 bis 15% Füllmaterial und 0,25 bis 2,0% Treibmittel, bezogen auf das Gewicht des thermoplastischen Polymers, umfaßt.

7. Verfahren nach Anspruch 5 oder 6, worin die vorbestimmte Menge der Mischung 15 bis 30 g für eine Golfballformhöhlung mit einem Durchmesser von ungefähr 1,68 Inch (42,67 mm) beträgt und in die Formhöhlung in 1 s oder weniger eingespritzt wird.

8. Verfahren nach einem der Ansprüche 5 bis 7, worin die Mischung durch einen Injektor, der einen zunehmenden Temperaturgradienten von seinem Einlaß bis zu seiner Düse besitzt, eingespritzt wird, so daß ein vorzeitiges Blasen bzw. Treiben in dem Injektor minimiert wird und die Viskosität der Mischung an der Düse verringert wird.

9. Verfahren nach einem der Ansprüche 5 bis 8, worin die Mischung in der Form über 60 bis 240 s gehalten wird.

## Revendications

1. Une balle de golf à trajectoire courte en une seule pièce formée d'un produit de moulage d'un polymère thermoplastique mousse, la balle ayant un gradient de densité croissant depuis le centre à la surface, caractérisée en ce que le polymère thermoplastique contient, comme charge, des bulles microscopiques de verre qui sont distribuées uniformément dans toute la masse du polymère.

2. Une balle de golf selon la revendication 1, selon laquelle la balle a une structure de noyau cellulaire et une peau extérieure dense.

3. Une balle de golf selon la revendication 2, selon laquelle la peau a une épaisseur de 3,175 mm à 15,88 mm.

4. Une balle de golf selon l'une quelconque des revendications 1 à 3, qui comprend de 0,5 à 15% de matière de charge basé sur le poids du polymère thermoplastique, et la balle a un diamètre d'environ 42,67 mm et pèse de 15 à 30 g.

5. Un procédé pour fabriquer une balle de golf à trajectoire courte en une seule pièce qui comprend:

a. la formation d'un mélange d'une résine thermoplastique, d'un agent gonflant chimique, et, comme matière de charge, des bulles microscopiques de verre;

b. l'injection d'une quantité prédéterminée du mélange dans une cavité de moulage d'une balle de golf;

c. le maintien du mélange dans la cavité de moulage pendant un temps prédéterminé;

d. l'ouverture de la cavité de moulage et la séparation de la balle de golf de cette dernière; et

e. le refroidissement rapide de la balle de golf dans l'eau refroidie.

6. Un procédé selon la revendication 5, selon lequel le mélange comprend de 0,5 à 15% de matière de charge et de 0,25 et 2,0% d'agent gonflant, basé sur le poids du polymère thermoplastique.

7. Un procédé selon la revendication 5 ou 6, selon lequel la quantité prédéterminée de mélange est de 15 à 30 g pour une cavité de moulage de balle de golf ayant une diamètre d'environ 42,67 mm et est injectée dans la cavité de moulage en 1 s ou moins.

8. Un procédé selon l'une quelconque des revendications 5 à 7, selon lequel le mélange est injecté par un injecteur qui a un gradient de température croissant de son entrée à sa buse pour minimiser le gonflement prématuré dans l'injecteur et la viscosité du mélange est réduite au niveau de la buse.

9. Un procédé selon l'une quelconque des revendications 5 à 8, selon lequel le mélange est maintenu dans le moule pendant 60 à 240 s.

Fig. 1.

Fig. 2